# EUROPEAN PATENT APPLICATION

(11) **EP 4 831 921 A1**
(43) Date of publication of application: **28.10.2026**
(21) Application number: 26160809.5
(22) Date of filing: 25.02.2026
(51) Int. Cl.: G06T 7/70

(54) **APPARATUS AND METHOD FOR TRAINING VISUAL ODOMETRY MODEL**

(30) Priority: 25.04.2025 KR 20250054659; 04.06.2025 KR 20250073214
(71) Applicant: Serdic, Inc., Busan Gangseo-gu 46717 (KR)
(72) Inventor: PARK, Chansoo, 01168 Seoul (KR); KANG, Jin Kyu, 04423 Seoul (KR)
(74) Representative: Reich, Jochen

(57) **Abstract**

The present disclosure discloses an apparatus and method for training a visual odometry model. The apparatus for training a visual odometry model according to the present disclosure may include: a depth information acquisition unit that inputs a target frame image from an image captured by a camera to a first artificial neural network model to obtain a prediction value of depth at each pixel; a pose information acquisition unit that inputs the target frame image and a source frame image, which is a frame image immediately before or immediately after the target frame image, to a second artificial neural network model to obtain pose transformation prediction information of the camera; an image generation unit that generates a synthetic image using the target frame image, the source frame image, the prediction value of the depth, and the pose transformation prediction information; and a learning unit that trains the first artificial neural network model and the second artificial neural network model to minimize loss between the target frame image and the synthetic image.

## Description

### CROSS-REFERENCE TO RELATED APPLICATIONS

This application claims the priority of Korean Patent Application No. 10-2025-0073214 filed on June 4, 2025, in the Korean Intellectual Property Office, the disclosure of which is incorporated herein by reference.

### BACKGROUND

### Field

The present disclosure relates to an apparatus and method for training a visual odometry model, and more particularly, to an apparatus and method for training a visual odometry model based on deep learning using self-supervised learning.

### Description of the Related Art

The material described in this section merely provides background information on the embodiments described in the present disclosure and does not necessarily constitute prior art.

Visual odometry (VO) is a technology that estimates the position and posture changes of a moving object using continuous image data acquired from a camera. The VO is a crucial technology for obtaining position and posture information for the moving object in environments where global positioning system (GPS) signals are weak or unavailable, such as indoors, underground spaces, and densely populated urban areas. In particular, the VO plays a key role in diverse fields such as robotics, autonomous vehicles, drone flight, augmented reality (AR), and virtual reality (VR).

The VO technology may be broadly divided into a feature-based method and a direct-based method. In the feature-based method, specific key points (for example, ORB, SIFT, or the like) in an image are detected, the key points are matched with the next frame to calculate the relative movement of the moving object. Representative feature-based algorithms include ORB-SLAM, PTAM, SVO, and the like, and these methods have the advantage of being robust to environmental changes.

In the direct method, the movement of the moving object is estimated by directly comparing the pixel intensities of all pixels or a specific area of an image, and representative algorithms thereof include DSO, LSD-SLAM, or the like. The direct method shows relatively robust performance even in environments with insufficient texture. A supervised learning-based VO model has been emerged with the development of deep learning. The supervised learning-based VO model may estimate the position and posture information with high accuracy, but requires accurate ground-truth for the position and posture. To obtain this ground-truth, a motion capture system, a GNSS/RTK system, and LiDAR-based scan matching are commonly used.

The motion capture system provides highly accurate position and posture data using objects or sensors with reflective markers attached to them in an environment with multiple fixed cameras. The motion capture system may provide sub-millimeter precision, particularly in indoor environments.

The Global Navigation Satellite System (GNSS)/Real-Time Kinematic (RTK) system provides accurate location data in centimeters (cm) based on GPS outdoors. The GNSS/RTK system is particularly effective in wide-open areas.

Light Detection and Ranging (LiDAR)-based scan matching pre-builds a high-precision HD map and aligns a real-time point cloud acquired via LiDAR with the map to calculate position and posture. The LiDAR-based scan matching is primarily used for high-precision position estimation in autonomous vehicles.

However, the supervised learning-based methods have limitations such as high cost and limited environments for obtaining the accurate ground-truth in the real world. In particular, the supervised learning-based methods have the disadvantage of being difficult to apply in dynamic or random environments, where obtaining ground-truth is realistically impossible or difficult.

### [Prior Arts]

### [Patent Documents]

(Patent document 1) Korean Patent Application No. 10-2021-0065381 (June 4, 2021)

### SUMMARY

An object of the present disclosure is to provide an apparatus and method for training a visual odometry model.

The biggest limitations of supervised learning-based visual odometry models are that the process of acquiring ground-truth is very expensive and complex, and there are significant environmental constraints. In real-world situations where obtaining the ground-truth is difficult or impossible, the application of supervised learning methods is limited.

The present disclosure proposes an apparatus and method for training a self-supervised visual odometry model that applies pixel-level uncertainty to overcome the limitations of the above-mentioned supervised learning method and to further improve the performance of the existing supervised learning method.

The present disclosure is not limited to the above-mentioned objects, and other objects not mentioned will be clearly understood by those skilled in the art from the description below.

In order to achieve the objects, according to an aspect of the present disclosure, there is provided an apparatus for training a visual odometry model, the apparatus including: a depth information acquisition unit that inputs a target frame image from an image captured by a camera to a first artificial neural network model to obtain a prediction value of depth at each pixel; a pose information acquisition unit that inputs the target frame image and a source frame image, which is a frame image immediately before or immediately after the target frame image, to a second artificial neural network model to obtain pose transformation prediction information of the camera; an image generation unit that generates a synthetic image using the target frame image, the source frame image, the prediction value of the depth, and the pose transformation prediction information; and a learning unit that trains the first artificial neural network model and the second artificial neural network model to minimize loss between the target frame image and the synthetic image.

According to one embodiment of the present disclosure, the first artificial neural network model may include an encoder that generates a feature map from the target frame image and a decoder that generates the prediction value of the depth from the feature map, and the second artificial neural network model may include a convolutional neural network (CNN) layer that generates feature maps of the target frame image and the source frame image, a global average pooling (GAP) layer that generates a feature vector from the feature map, and a fully connected (FC) layer that generates the pose transformation prediction information from the feature vector.

The apparatus for training a visual odometry model according to one embodiment of the present disclosure may further include a preprocessing unit that adjusts the target frame image and the source frame image to have preset sizes and adjusts a pixel value of each frame image to have a value within a preset range.

According to one embodiment of the present disclosure, the pose information acquisition unit may concatenate the target frame image and the source frame image along an RGB channel axis and input the concatenated images to the second artificial neural network model.

According to one embodiment of the present disclosure, the pose transformation prediction information may be a homogeneous transformation matrix representing a 6-degree-of-freedom transformation from the target frame image to the source frame image.

According to one embodiment of the present disclosure, the image generation unit may generate a first camera coordinate system value by converting a coordinate value of each pixel of the target frame image into a camera coordinate system in a first state in which the camera captures the target frame image using the prediction value of the depth, generates a second camera coordinate system value by converting the first camera coordinate system value into a camera coordinate system in a second state in which the camera captures the source frame image using the pose transformation prediction information, generate a source coordinate value by converting the second camera coordinate system value into a pixel coordinate value in the source frame image, and generate the synthetic image using each pixel value corresponding to the source coordinate value in the source frame image.

According to one embodiment of the present disclosure, the learning unit may train the first artificial neural network model and the second artificial neural network model so that a loss function expressed by the following Mathematical Expression is minimized.${L}_{reproj} = {\sum }_{p ∈ Ω} \left|{I}_{t}\left(p\right)-\hat{{I}_{t}}\left(p\right)\right|$
Ω : valid pixel area
*Iₜ*(*p*) : pixel value in target frame image
$\hat{{I}_{t}} \left(p\right)$ : Pixel value in synthetic image

At this time, the loss function may further include an uncertainty value calculated by inputting the prediction value of the depth into a sigmoid function as in the following Mathematical Expression.${L}_{reproj}^{uncertainty} = {\sum }_{p ∈ Ω} \frac{\left|{I}_{t}\left(p\right)-\hat{{I}_{t}}\left(p\right)\right|}{σ \left(p\right)} + log \left(σ\left(p\right)\right)$
σ (*p*) : uncertainty value in image pixel *p*

At this time, the loss function may further include a smoothness loss function as expressed in the following Mathematical Expression.${L}_{total} = {\sum }_{p ∈ Ω} {L}_{reproj}^{uncertainty} \left(p\right) + {λ}_{smooth} {L}_{smooth}$
*Lₛₘₒₒₜₕ* : smoothness loss
*λ*ₛₘₒₒₜₕ : weight of smoothness loss

In order to achieve the objects, according to another aspect of the present disclosure, there is provided a method for training a visual odometry model, the method including: (a) inputting, by a depth information acquisition unit, a target frame image from an image captured by a camera to a first artificial neural network model to obtain a prediction value of a depth at each pixel; (b) inputting, by a pose information acquisition unit, the target frame image and a source frame image, which is a frame image immediately before or immediately after the target frame image, to a second artificial neural network model to obtain pose transformation prediction information of the camera; (c) generating, by an image generation unit, a synthetic image using the target frame image, the source frame image, the prediction value of the depth, and the pose transformation prediction information; and (d) training, by a learning unit, the first artificial neural network model and the second artificial neural network model to minimize loss between the target frame image and the synthetic image.

According to one embodiment of the present disclosure, the first artificial neural network model may include an encoder that generates a feature map from the target frame image and a decoder that generates the prediction value of the depth from the feature map, and the second artificial neural network model may include a convolutional neural network (CNN) layer that generates feature maps of the target frame image and the source frame image, a global average pooling (GAP) layer that generates a feature vector from the feature map, and a fully connected (FC) layer that generates the pose transformation prediction information from the feature vector.

According to one embodiment of the present disclosure, the method may further include adjusting the target frame image and the source frame image to have preset sizes and adjusting a pixel value of each frame image to have a value within a preset range.

According to one embodiment of the present disclosure, the (b) may include concatenating, by the pose information acquisition unit, the target frame image and the source frame image along an RGB channel axis and inputting the concatenated images to the second artificial neural network model.

According to one embodiment of the present disclosure, the pose transformation prediction information may be a homogeneous transformation matrix representing a 6-degree-of-freedom transformation from the target frame image to the source frame image.

According to one embodiment of the present disclosure, the (c) may include, by the image generation unit, (c-1) generating a first camera coordinate system value by converting a coordinate value of each pixel of the target frame image into a camera coordinate system in a first state in which the camera captures the target frame image using the prediction value of the depth; (c-2) generating a second camera coordinate system value by converting the first camera coordinate system value into a camera coordinate system in a second state in which the camera captures the source frame image using the pose transformation prediction information; (c-3) converting the second camera coordinate system value into a source coordinate value which is a pixel coordinate value in the source frame image; and (c-4) generating the synthetic image using each pixel value corresponding to the source coordinate value in the source frame image.

According to one embodiment of the present disclosure, the (d) may include training, by the learning unit, the first artificial neural network model and the second artificial neural network model so that a loss function expressed by the following Mathematical Expression is minimized.${L}_{reproj} = {\sum }_{p ∈ Ω} \left|{I}_{t}\left(p\right)-\hat{{I}_{t}}\left(p\right)\right|$
Ω : valid pixel area
*Iₜ*(*p*) : pixel value in target frame image
$\hat{{I}_{t}} \left(p\right)$ : Pixel value in synthetic image

At this time, the loss function may further include an uncertainty value calculated by inputting the prediction value of the depth into a sigmoid function as in the following Mathematical Expression.${L}_{reproj}^{uncertainty} = {\sum }_{p ∈ Ω} \frac{\left|{I}_{t}\left(p\right)-\hat{{I}_{t}}\left(p\right)\right|}{σ \left(p\right)} + log \left(σ\left(p\right)\right)$
*σ*(*p*) : uncertainty value in image pixel *p*

At this time, the loss function further includes a smoothness loss function as expressed in the following Mathematical Expression.${L}_{total} = {\sum }_{p ∈ Ω} {L}_{reproj}^{uncertainty} \left(p\right) + {λ}_{smooth} {L}_{smooth}$
*Lₛₘₒₒₜₕ* : smoothness loss
*λₛₘₒₒₜₕ* : weight of smoothness loss

The method for training a visual odometry model according to an embodiment of the present disclosure may be written to perform each step on a computer and implemented as a computer program recorded on a computer-readable recording medium.

Other specific details of the present disclosure are included in the detailed description and drawings.

According to one aspect of the present disclosure, the apparatus for training a visual odometry model may train the first artificial neural network model to generate the prediction value of the depth for each pixel using only the frame image without ground-truth, and may train the second artificial neural network model to generate the pose transformation prediction information of the camera. Accordingly, the apparatus for training a visual odometry model may reduce the costs associated with collecting and labeling ground-truth compared to the conventional apparatus.

According to another aspect of the present disclosure, the apparatus for training a visual odometry model may introduce pixel-level uncertainty so that the first artificial neural network model and the second artificial neural network model may automatically adjust the importance of each pixel. Accordingly, the apparatus for training a visual odometry model may train the first artificial neural network model and the second artificial neural network model to generate more accurate information compared to conventional methods.

According to still another aspect of the present disclosure, the trained first artificial neural network model and the trained second artificial neural network model may generate predictive information more efficiently and quickly than the conventional apparatus, even on mobile and embedded devices, through a lightweight network design. Therefore, the trained first artificial neural network model and the trained second artificial neural network model may be utilized in various real-time applications, such as augmented reality (AR), virtual reality (VR), autonomous vehicles, and robots.

According to another aspect of the present disclosure, the trained first artificial neural network model and the trained second artificial neural network model may generate accurate prediction information even on various mobile platforms with limited hardware resources by supporting improved computational efficiency and low-power operation through an optimized model structure.

The effects of the present disclosure are not limited to the effects mentioned above, and other effects not mentioned will be clearly understood by those skilled in the art from the description below.

The effects of the present disclosure are not limited to the aforementioned effects, and other effects, which are not mentioned above, will be apparently understood to a person having ordinary skill in the art from the following description.

The objects to be achieved by the present disclosure, the means for achieving the objects, and the effects of the present disclosure described above do not specify essential features of the claims, and, thus, the scope of the claims is not limited to the disclosure of the present disclosure.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a block diagram of an apparatus for training a visual odometry model according to one embodiment of the present disclosure, and FIG. 2 is a diagram illustrating an example of a learning pipeline for a first artificial neural network model and a second artificial neural network model.
FIG. 3 is a block diagram of an apparatus for training a visual odometry model according to another embodiment of the present disclosure.
FIG. 4 is a diagram visualizing an example in which uncertainty is included in a prediction value of a depth.
FIG. 5 is a diagram illustrating an example in which a trained first artificial neural network model generates the prediction value of the depth, and FIGS. 6 to 9 are diagrams illustrating examples of results obtained by tracking movement and rotation of a camera using the trained first artificial neural network model and a trained second artificial neural network model.
FIG. 10 is a flowchart of a method for training a visual odometry model according to one embodiment of the present disclosure.
FIG. 11 is a flowchart illustrating a process for generating a synthetic image according to one embodiment of the present disclosure.

### DETAILED DESCRIPTION OF THE EMBODIMENT

Hereinafter, the exemplary embodiment of the present disclosure will be described with reference to the accompanying drawings and exemplary embodiments as follows. Scales of components illustrated in the accompanying drawings are different from the real scales for the purpose of description, so that the scales are not limited to those illustrated in the drawings.

The advantages and features of the disclosure disclosed in the present disclosure, and the methods for achieving them, will become clearer with reference to the embodiments described in detail below together with the accompanying drawings. However, the present disclosure is not limited to the embodiments disclosed below and may be implemented in various different forms. These embodiments are provided only to ensure that the disclosure of the present invention is complete and to fully inform those of ordinary skill in the art (hereinafter referred to as "skilled workers") of the scope of the present disclosure, and the scope of rights of the present disclosure is defined only by the scope of the claims.

The terminology used in the present disclosure is for the purpose of describing embodiments and is not intended to limit the scope of the present disclosure. In the present disclosure, singular forms also include plural forms, unless specifically stated otherwise. As used in the present disclosure, the terms "comprise" and/or "comprising" do not exclude the presence or addition of one or more other components in addition to the components mentioned.

Throughout the specification, the same reference numerals refer to the same elements, and the term "and/or" includes each and every combination of the elements mentioned. Although terms such as "first," "second," or the like are used to describe various elements, these elements are not limited by these terms. These terms are used only to distinguish one element from another. Therefore, it should be understood that a first element mentioned below may also be a second element within the technical scope of the present disclosure.

Unless otherwise defined, all terms (including technical and scientific terms) used in the present disclosure may be used in their common sense to those skilled in the art to which the present disclosure pertains. Furthermore, terms defined in commonly used dictionaries are not to be interpreted ideally or excessively unless explicitly and specifically defined otherwise.

An artificial neural network (ANN) is an artificial intelligence system that connects artificial neurons that are mathematically modeled after the neurons that make up the human brain.

As used in the present disclosure, an "artificial neural network model" may be comprised of a set of interconnected computational units, generally referred to as nodes. These nodes may also be referred to as neurons. A neural network includes at least one node. The nodes (or neurons) including the neural network may be interconnected by one or more links.

A deep neural network (DNN) may refer to a neural network that includes a plurality of hidden layers in addition to an input layer and an output layer. The deep neural network may include a convolutional neural network (CNN), a recurrent neural network (RNN), an autoencoder, a generative adversarial network (GAN), a restricted Boltzmann machine (RBM), a deep belief network (DBN), a Q network, a U network, a Siamese network, a generative adversarial network (GAN), and the like. The description of the above-described deep neural network is merely an example, and the present disclosure is not limited thereto.

The neural networks may be trained to minimize output errors. In the neural network learning, training data is repeatedly input into the neural network, the neural network output and target error for the training data are calculated, and the error of the neural network is backpropagated from the output layer of the neural network toward the input layer to reduce the error, thereby updating the weights of each node of the neural network. In the present disclosure, the "learning" of an artificial neural network model means that the neural network updates the connection weights of each node so that the output error is minimized, and "learning" according to the present disclosure is not limited by a specific training method.

Hereinafter, embodiments of the present disclosure will be described in detail with reference to the attached drawings.

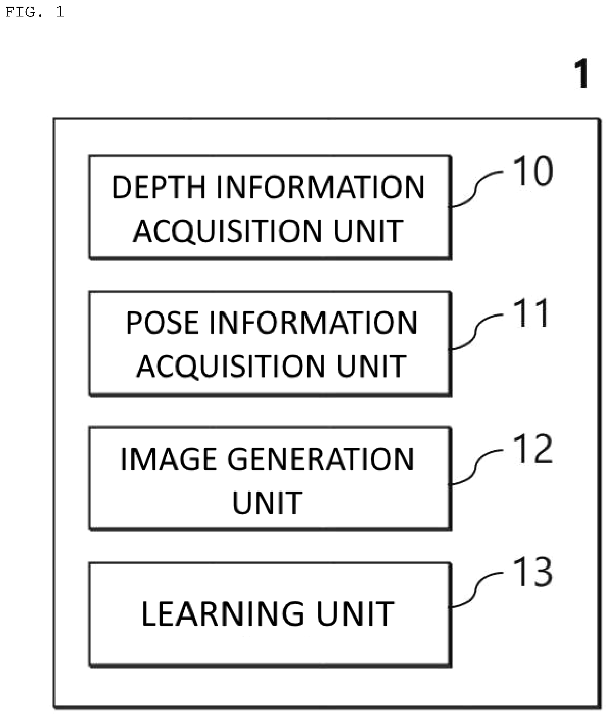

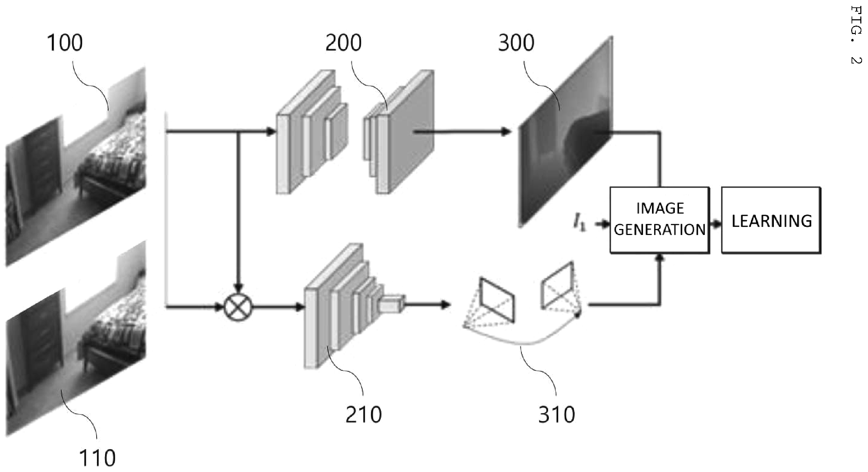

FIG. 1 is a block diagram of an apparatus for training a visual odometry model according to one embodiment of the present disclosure, and FIG. 2 is a diagram illustrating an example of a learning pipeline of a first artificial neural network model and a second artificial neural network model.

Referring to FIGS. 1 and 2, an apparatus 1 for training a visual odometry model according to one embodiment of the present disclosure may include a depth information acquisition unit 10, a pose information acquisition unit 11, an image generation unit 12, and a learning unit 13.

The depth information acquisition unit 10 may input a target frame image 100 from an image captured by a camera to a first artificial neural network model 200 to obtain a prediction value 300 of depth at each pixel.

The above camera may be included in a moving object such as a vehicle or drone. The image may be an image captured by the camera when the moving object is moving.

The target frame image 100 may correspond to any one of a plurality of frame images constituting the above image.

In the present disclosure, the depth value at each pixel may mean the distance from the optical center of the camera to a point in real space corresponding to each pixel of the target frame image 100.

The prediction value of the depth may refer to a result value calculated by the first artificial neural network model 200 upon receiving the target frame image 100 as input. The prediction value of the depth may refer to an estimated value of the depth value at each pixel generated using the target frame image 100.

The pose information acquisition unit 11 may acquire pose transformation prediction information 310 of the camera by inputting the target frame image 100 and a source frame image 110, which is the frame image immediately before or immediately after the target frame image, to the second artificial neural network model 210.

In the present disclosure, pose transformation information may mean information about changes in position and/or rotation of the camera in real space.

The pose transformation prediction information 310 may refer to a result value calculated by the second artificial neural network model 210 by receiving a target frame image 100 and a source frame image 110 as input. The pose transformation prediction information 310 may refer to an estimated value of the pose transformation information calculated based on the difference between the target frame image 100 and the source frame image 110.

The image generation unit 12 may generate a synthetic image using the target frame image 100, the source frame image 110, the prediction value 300 of the depth, and the pose transformation prediction information 310.

The synthetic image may refer to an image generated based on values converted from the coordinate values of pixels in the target frame image 100 to the coordinate system of pixels in the source frame image 110 using the prediction value 300 of the depth and the pose transformation prediction information 310. The synthetic image will be described in more detail below.

The learning unit 13 may train the first artificial neural network model 200 and the second artificial neural network model 210 so that the loss between the target frame image 100 and the synthetic image is minimized.

In the present disclosure, the learning unit 13 may include one or more cores, and may include a processor for data analysis and deep learning, such as a central processing unit (CPU), a general-purpose graphics processing unit (GPGPU), and a tensor processing unit (TPU) of a computing device. The learning unit 13 may read a computer program stored in a memory and perform data processing for machine learning according to one embodiment of the present disclosure. According to one embodiment of the present disclosure, the learning unit 13 may perform operations for training a neural network. The learning unit 13 may perform calculations for training a neural network, such as processing input data for training in deep learning (DL), extracting features from input data, calculating errors, and updating weights of a neural network using backpropagation. At least one of the CPU, GPGPU, and TPU of the processor may process learning of a network function. For example, a CPU and a GPGPU may work together to train network functions and classify data using network functions. Furthermore, in one embodiment of the present disclosure, processors from a plurality of computing devices may be used together to train network functions and classify data using the network functions. Furthermore, a computer program executed on a computing device according to one embodiment of the present disclosure may be a CPU, GPGPU, or TPU executable program.

The first artificial neural network model 200 and the second artificial neural network model 210 may be stored in a storage medium included in the apparatus 1 for training a visual odometry model.

The first artificial neural network model 200 and the second artificial neural network model 210 may be components of an artificial intelligence model for the visual odometry.

In the present disclosure, the plurality of frame images included in the video may be expressed mathematically as [Mathematical Expression 1] below. [Mathematical expression 1] $I = {I}_{t - 1} , {I}_{t} , {I}_{t + 1}$
*I*ₜ₋₁ : previous frame image
*Iₜ* : target frame image (current frame image)
*I*ₜ₊₁ : immediately following frame image

When representing frame images in pixel units, each frame image may be represented as a 3D tensor (*Iₜ* ∈ *R^{H×W×C}*) with width (*W*), height (*H*), and three RGB channels (*C*).

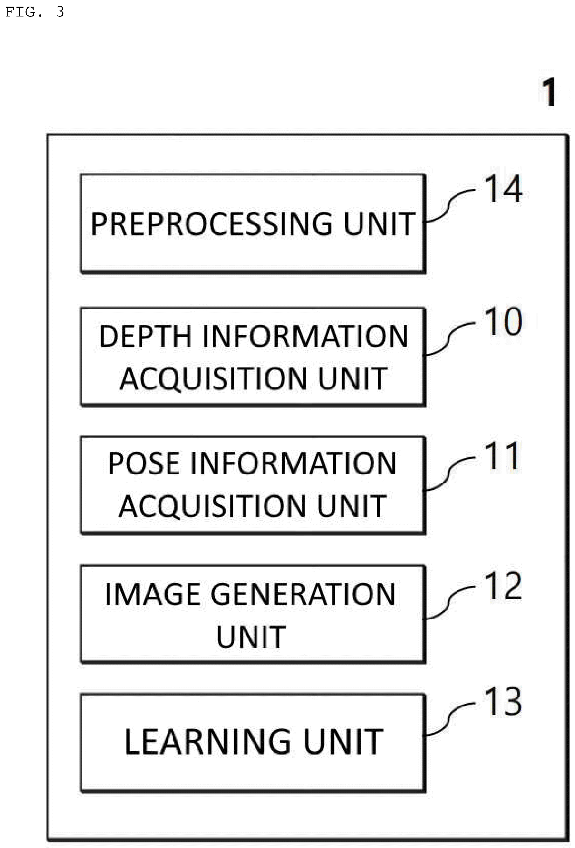

FIG. 3 is a block diagram of an apparatus for training a visual odometry model according to another embodiment of the present disclosure.

Referring to FIG. 3, the apparatus 1 for training the visual odometry model may further include a preprocessing unit 14.

The preprocessing unit 14 may adjust the target frame image 100 and the source frame image 110 to have preset sizes. For example, the preprocessing unit 14 may adjust the sizes of the target frame image 100 and the source frame image 110 to 640 × 192, which is an example and is not limited by the above sizes.

In addition, the preprocessing unit 14 may adjust the pixel values of the target frame image 100 and the source frame image 110 to have values within a preset range. For example, the preprocessing unit 14 may adjust the pixel values of the target frame image 100 and the source frame image 110 using an algorithm such as min-max normalization or z-score normalization, which is merely an example and is not limited by the above algorithm.

The preprocessing unit 14 may improve the generalization performance of the first artificial neural network model 200 and the second artificial neural network model 210 by preprocessing the target frame image 100 and the source frame image 110.

In addition, the preprocessing unit 14 may generate additional training data by augmenting the image based on transformations such as up/down/left/right reversal, zoom in/out, and rotation of the target frame image 100 and the source frame image 110.

The depth information acquisition unit 10 may input the target frame image 100 to the first artificial neural network model 200. The first artificial neural network model 200 may generate the prediction value of the depth.

According to one embodiment of the present disclosure, the first artificial neural network model 200 may include an encoder that generates a feature map from the target frame image 100 and a decoder that generates the prediction value of the depth from the feature map.

The feature map is input/output data in a convolutional neural network (CNN), and includes semantic and structural features for depth estimation while reducing spatial information from an input RGB image. Moreover, this is a concept widely known among those skilled in the art, a detailed description is omitted.

The first artificial neural network model 200 according to the present disclosure may be implemented based on the structure of [Table 1] below.

**[Table 1]**

| Stage | Operation | Structure description | Output channel |
|---|---|---|---|
| Input | RGB image | Input (H X W X 3) | 3 |
| 1 | Standard Conv | 3X3 Conv, stride=2 | 32 |
| 2 | Depthwise Separable Block X2 | [DW Conv 3X3, PW Conv 1X1] X 2 | 64 |
| 3 | Depthwise Separable Block X2 | [DW Conv 3X3, PW Conv 1X1] X 2 | 128 |
| 4 | Standard Residual Block X2 | Standard Conv(3X3) X 2 (ResNet structure) | 256 |
| 5 | Depthwise Separable Block X2 | [DW Conv 3X3, PW Conv 1X1] X 2 | 256 |
| Decoder | Upsample + DW/PW Conv | UpConv + Depthwise Separable Conv | 16 |
| output | Pointwise Conv | 1X1 Conv (Depth Map output) | 1 |

The encoder may generate the feature map from the target frame image 100 over a total of five stages. From stage 1 to stage 5, higher levels of feature information may be extracted. Thereafter, the decoder may up-sample the feature map to generate the prediction value of the depth.

At this time, the prediction value of the depth may be output in the form of a depth map. The depth map may be expressed as a two-dimensional matrix having the prediction value of the depth at each pixel location in the target frame image 100. The prediction value of the depth may be expressed by the following [Mathematical Expression 2]. [Mathematical expression 2] ${D}_{t} ∈ {ℝ}^{H \times W}$
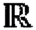 : Real number space

The pose information acquisition unit 11 may input the target frame image 100 and the source frame image 110 to the second artificial neural network model 210.

According to one embodiment of the present disclosure, the second artificial neural network model 210 may include a convolutional neural network (CNN) layer, a global average pooling (GAP) layer, and a fully connected (FC) layer.

The CNN layer may generate the feature map from the target frame image 100 and the source frame image 110. The GAP layer may generate a feature vector using the feature map. The FC layer may generate the pose transformation prediction information using the feature vector.

According to one embodiment of the present disclosure, the pose information acquisition unit 11 may concatenate the target frame image 100 and the source frame image 110 along RGB channel axes and input the concatenated images to the second artificial neural network model 210.

As described above, each frame image may be expressed as a three-dimensional tensor with width, height, and three RGB channels. When the target frame image 100 and the source frame image 110 are concatenated with the RGB channel axis, the two frame images may be expressed as one three-dimensional tensor (*Iₜ* ∈ *R*^{*H*×*W*×6}) with width, height, and six RGB channels. Concatenating the two frame images with the RGB channel axis cites the prior literature "TRAINING ALIGNMENT OF A PLURALITY OF IMAGES, Koninklijke Philips N.V., EP 3 882 852 A1" and "Spot the Difference by Object Detection, Junhui Wu et al., arXiv:1801.01051v1".

According to one embodiment of the present disclosure, the pose transformation prediction information may be expressed as a homogeneous transformation matrix representing a six-degree-of-freedom (6-DoF) transformation from the target frame image 100 to the source frame image 110, as in [Mathematical Expression 3] below. [Mathematical expression 3] ${T}_{target \to source} = \left[\begin{matrix}R & t \\ 0 & 1\end{matrix}\right] , {T}_{target \to source} ∈ SE \left(3\right)$

In the [Mathematical Expression 3], *SE*(3) may refer to the Special Euclidean Group which is a set representing rigid-body motion in three-dimensional Euclidean space, and may be expressed as [Mathematical Expression 4] below. [Mathematical expression 4] $SE \left(3\right) = \left\{T=\left.\left[\begin{matrix}R & t \\ 0 & 1\end{matrix}\right]\right|R∈SO\left(3\right),t∈{ℝ}^{3}\right\}$

In [Mathematical Expression 4] , *R* ∈ *SO*(3) is a 3 × 3 matrix representing rotation, is an orthogonal matrix, and may have a determinant value of 1. $t ∈ {ℝ}^{3}$ may denote a 3D vector representing translation.

More specifically, the transformation matrix of *SE*(3) may be expressed as [Mathematical Expression 5] below. [Mathematical expression 5] $T = \left[\begin{matrix}{R}_{3 \times 3} & {t}_{3 \times 1} \\ {0}_{1 \times 3} & 1\end{matrix}\right] = \left[\begin{matrix}{r}_{11} & {r}_{12} & {r}_{13} & {t}_{x} \\ {r}_{21} & {r}_{22} & {r}_{23} & {t}_{y} \\ {r}_{31} & {r}_{32} & {r}_{33} & {t}_{z} \\ 0 & 0 & 0 & 1\end{matrix}\right]$

In the [Mathematical Expression 5], *R* is a rotation matrix, and may have the characteristics as in [Mathematical Expression 6] below. [Mathematical expression 6] $SO \left(3\right) = \left.R∈{ℝ}^{3 \times 3}\right| {R}^{T} R = I , det \left(R\right) = 1$

In the [Mathematical Expression 6], SO(3) is an abbreviation for Special Orthogonal Group in 3D, and may mean a set of matrices expressing rotation in a three-dimensional space. In this definition, *R* may be a 3 × 3 matrix expressing rotation, and 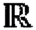 may mean a set of real numbers. In particular, ${ℝ}^{3}$ may mean a three-dimensional real vector space. In addition, the above SO(3) has orthogonality, and the determinant may have a value of 1.

Each row of the rotation matrix may mean a direction vector toward which each axis is directed after the rotation. In the rotation matrix, the first row may mean a direction vector toward which the existing x-axis is directed after the camera is rotated, the second row may mean a direction vector toward which the existing y-axis is directed after the camera is rotated, and the third row may mean a direction vector toward which the existing z-axis is directed after the camera is rotated. That is, the rotation matrix may mean how much the coordinate system in the first state rotates when the camera changes from a first state in which the camera captures the target frame image 100 to a second state in which the camera captures the source frame image 110.

In the [Mathematical Expression 5], *t* = [*tₓ, t_{y}, t_{z},*]*^{T}* may mean a translation vector. The translation vector may mean how much the camera moves in the x, y, and z-axis directions when the camera changes from the first state to the second state.

That is, the pose transformation prediction information may mean information on a 6-degree-of-freedom transformation, which is information on position change information about each axis in the 3D space of the camera and rotation change information about each axis when the camera changes from the first state to the second state.

The image generation unit 12 may generate the synthetic image using the prediction value of the depth and the pose transformation prediction information.

First, the image generation unit 12 may generate a three-dimensional coordinate value for each pixel of the target frame image 100 using the prediction value of the depth. The image generation unit 12 may convert the coordinate (*p =* [*u, v,* 1]*^{T}*) for each pixel in the target frame image 100 into a first camera coordinate value, which is a three-dimensional coordinate value for the camera coordinate system in the first state, using the following [Mathematical Expression 7]. [Mathematical expression 7] ${X}_{c} = {D}_{t} \left(p\right) ⋅ {K}^{- 1} p$
*Dₜ*(*p*): prediction value of depth for pixel p
*K*⁻¹: inverse matrix of camera intrinsic matrix

The camera intrinsic matrix may be expressed as [Mathematical Expression 8] below. [Mathematical expression 8] $K = \left(\begin{matrix}{f}_{x} & s & {c}_{x} \\ 0 & {f}_{y} & {c}_{y} \\ 0 & 0 & 1\end{matrix}\right)$
*fₓ:* x-axis focal length
*f_{y}:* y-axis focal length
*cₓ:* x-coordinate of the principal point
*c_{y}:* y-coordinate of the principal point
*s:* skew coefficient

According to the following [Mathematical Expression 9], the image generation unit 12 may use the pose transformation prediction information to convert the first camera coordinate system value into a second camera coordinate system value, which is a three-dimensional coordinate value for the camera coordinate system in the second state. [Mathematical expression 9] ${X}_{c ′} = {T}_{target \to source} {X}_{c}$

Afterwards, the image generation unit 12 may convert the second camera coordinate system value into the source coordinate value, which is the pixel coordinate value of the source frame image 110, using the following [Mathematical Expression 10]. [Mathematical expression 10] $p ′ = K {X}_{c ′}$

As described above, the process of converting the coordinate values of pixels in the target frame image 100 into coordinate values of pixels in the source frame image 110 may mean the process of reprojecting the target frame image 100 onto the source frame image 110.

The image generation unit 12 may generate the synthetic image using pixels corresponding to the source coordinates *p'* in the source frame image 110. A pixel located at the coordinates P in the synthetic image may have the pixel value corresponding to the source coordinates *p'* in the source frame image 110.

According to one embodiment of the present disclosure, the learning unit 13 may train the first artificial neural network model 200 and the second artificial neural network model 210 so that the loss function expressed by the following [Mathematical Expression 11] is minimized. [Mathematical expression 11] ${L}_{reproj} = {\sum }_{p ∈ Ω} \left|{I}_{t}\left(p\right)-\hat{{I}_{t}}\left(p\right)\right|$
Ω : Valid pixel area
*Iₜ*(*p*) : Pixel value in the target frame image
$\hat{{I}_{t}} \left(p\right)$ : Pixel value in the synthetic image

The valid pixel area may mean a set of pixels that have reached pixel coordinates on the source frame image 110 as a result of reprojecting the pixels of the target frame image 100 onto the source frame image 110.

For example, when the sizes of the target frame image 100 and the source frame image 110 are 640 × 192, the pixels of the target frame image 100 and the source frame image 110 may have coordinate values of (0, 0) to (639, 191). When the coordinate values of the pixels of the target frame image 100 are converted into the pixel coordinate values of the source frame image 110, the coordinate values of the converted pixels may have values between (0, 0) and (639, 191). In this case, the corresponding pixel may be included in the valid pixel area. When the coordinate values of the converted pixels are outside of (0, 0) to (639, 191), the corresponding pixel may not be included in the valid pixel area.

According to one embodiment of the present disclosure, the learning unit 13 may exclude the pixel from the valid pixel area when the difference between pixel values at the same location in the target frame image 100 and the synthetic image is greater than a preset reference value.

There may be a moving object in the real space, or a specific area may be covered by another object due to the movement of the camera. In this case, there may be a large difference in pixel values of a plurality of pixels included in an area where a moving object is located in the target frame image 100 and the source frame image 110 and/or a plurality of pixels included in an area covered by another object. Since the synthetic image is generated based on the pixel values in the source frame image 110, a large difference in pixel values in the above-described areas in the target frame image 100 and the synthetic image may be calculated. In this case, the loss between the target frame image 100 and the synthetic image may not be accurately calculated. As a result, the learning of the first artificial neural network model 200 and the second artificial neural network model 210 may not be accurately performed.

To prevent this, the learning unit 13 may exclude the pixel from the valid pixel area when the difference between the pixel values at the same location in the target frame image 100 and the synthetic image is equal to or greater than a preset reference value.

According to one embodiment of the present disclosure, the loss function may further include an uncertainty value calculated by inputting the prediction value of the depth into a sigmoid function as in [Mathematical Expression 12] below. [Mathematical expression 12] ${L}_{reproj}^{uncertainty} = {\sum }_{p ∈ Ω} \frac{\left|{I}_{t}\left(p\right)-\hat{{I}_{t}}\left(p\right)\right|}{σ \left(p\right)} + log \left(σ\left(p\right)\right)$
σ (*p*): uncertainty value in image pixel *p*

In the [Mathematical Expression 12], log(σ(*p*)) may act as a regularization term that prevents the first artificial neural network model 200 and the second artificial neural network model 210 from increasing the uncertainty value indefinitely.

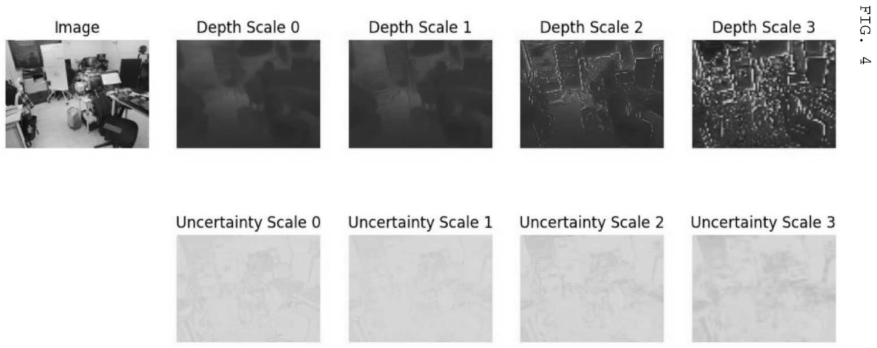

FIG. 4 is a diagram visualizing an example in which the uncertainty is included in the prediction value of the depth.

Referring to the example of FIG. 4, the first artificial neural network model 200 may generate a plurality of depth prediction values having different resolutions from the target frame image 100. The learning unit 13 may input the depth prediction values into a sigmoid function to produce the uncertainty value.

These pixel-level uncertainty values may be used to dynamically adjust the weight of each pixel when calculating the loss between the target frame image 100 and the synthetic image. The uncertainty value may improve the robustness and accuracy of the first artificial neural network model 200 and the second artificial neural network model 210.

The uncertainty value is generated for each pixel and may help the first artificial neural network model 200 and the second artificial neural network model 210 learn the variability of loss that may occur in each pixel of the target frame image 100 and the synthetic image.

The uncertainty-based loss function may reduce the impact of loss in areas containing moving objects and/or areas obscured by specific objects in the target frame image 100 and the synthetic image on the overall loss. Conversely, the uncertainty-based loss function may have lower uncertainty values in areas other than the aforementioned areas. The uncertainty value may decrease as the learning progresses.

In this way, the uncertainty-based loss function may dynamically adjust the loss produced at each pixel. The learning unit 13 may train the first artificial neural network model 200 and the second artificial neural network model 210 based on the loss produced from the uncertainty-based loss function, thereby improving the accuracy and robustness of the model.

According to one embodiment of the present disclosure, the loss function may further include a smoothness loss function, as in [Mathematical Expression 13] below. [Mathematical expression 13] ${L}_{total} = {\sum }_{p ∈ Ω} {L}_{reproj}^{uncertainty} \left(p\right) + {λ}_{smooth} {L}_{smooth}$
*Lₛₘₒₒₜₕ* : smoothness loss
*λₛₘₒₒₜₕ* : smoothness loss weight

The smoothness loss is a term that constrains the spatial smoothness of the depth map generated based on the prediction value of the depth. Since the smoothness loss is a widely known technique among those skilled in the art, a detailed explanation will be omitted.

The learning unit 13 may train the first artificial neural network model 200 and the second artificial neural network model 210 using the gradient descent method. In this case, the learning unit 13 may adjust the parameters of the first artificial neural network model 200 and the second artificial neural network model 210 according to the following [Mathematical Expression 14]. [Mathematical expression 14] ${θ}_{new} ← θ - η \frac{\partial {L}_{total}}{\partial θ}$
*η* : learning rate

The technique of training then artificial neural network model using the gradient descent method is widely known among those skilled in the art, so detailed descriptions thereof are omitted.

According to one embodiment of the present disclosure, the learning unit 13 may sequentially train the first artificial neural network model 200 and the second artificial neural network model 210. The learning unit 13 may first train the first artificial neural network model 200 and then train the second artificial neural network model 210.

In the early stages of the learning, the artificial neural network model may learn a large range of features, leading to significant performance improvements. However, as the learning progresses, the amount of loss reduction decreases compared to the initial stage, potentially hindering the performance of the artificial neural network model.

The learning unit 13 may first train the first artificial neural network model 200 using the result value of the loss function. The learning unit 13 may compare the accuracy before and after adjusting the weight of the first artificial neural network model 200. When the rate of increase in accuracy is below a preset reference value, the learning unit 13 may train the second artificial neural network model 210.

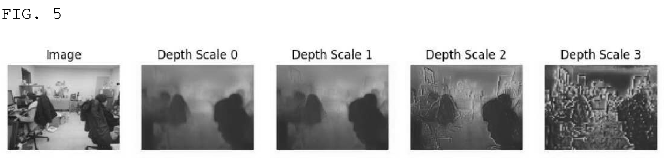

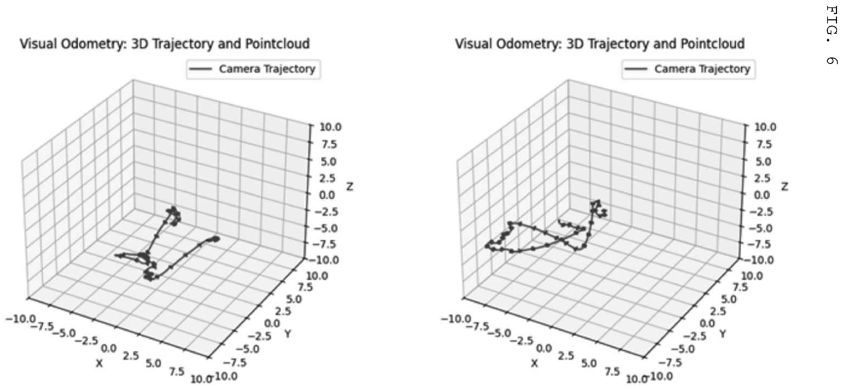

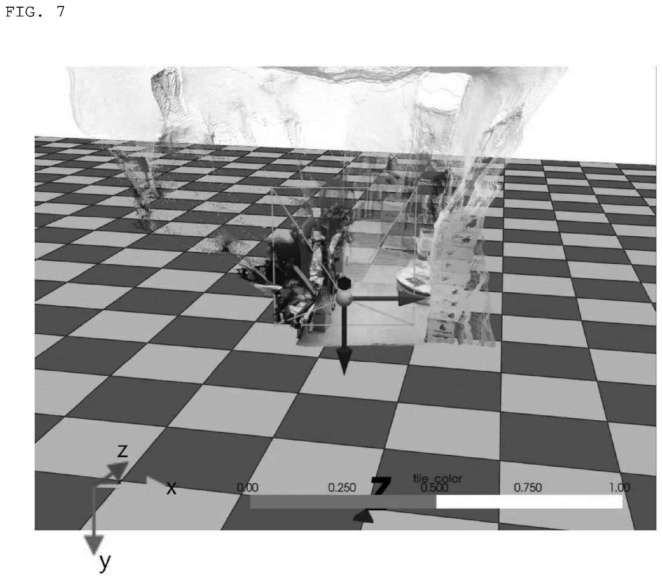

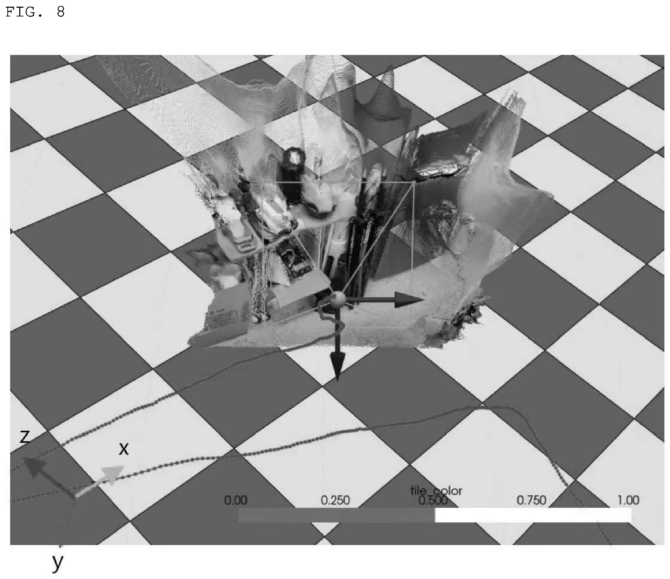

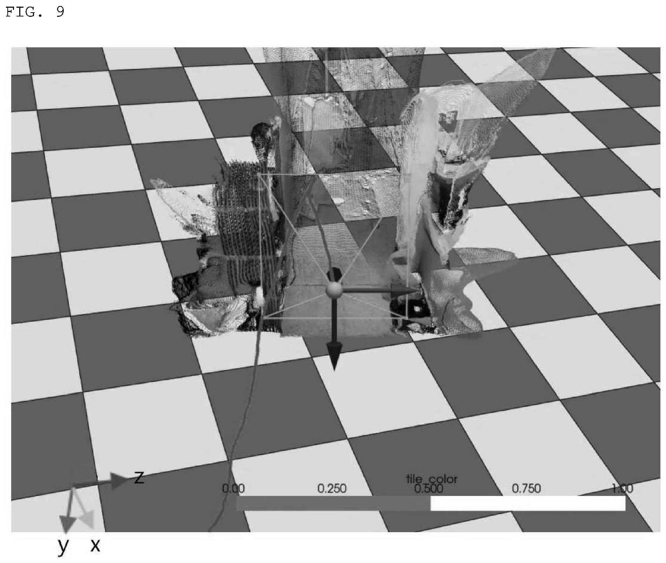

FIG. 5 is a diagram illustrating an example in which the trained first artificial neural network model generates the prediction value of the depth, and FIGS. 6 to 9 are diagrams illustrating examples of results of tracking the movement and rotation of the camera using the trained first artificial neural network model and the trained second artificial neural network model.

Referring to FIGS. 5 to 9, the trained first artificial neural network model may receive the target frame image as input and generate the depth prediction value. In this case, the depth prediction value may generate the plurality of depth prediction values having different resolutions, as described above.

The trained second artificial neural network model may receive the target frame image and the synthetic image as input and generate the pose transformation information. The pose transformation information may be used to track the movement and rotation of the camera. The camera's movement trajectory may be indicated by a red line.

The depth information acquisition unit 10, the pose information acquisition unit 11, the image generation unit 12, the learning unit 13, and the preprocessing unit 14 may include a processor, an application-specific integrated circuit (ASIC), another chipset, a logic circuit, a register, a communication modem, a data processing device, or the like known in the technical field to which the present disclosure pertains in order to execute calculations and various control logics. In addition, when the above-described control logic is implemented in software, the depth information acquisition unit 10, the pose information acquisition unit 11, the image generation unit 12, the learning unit 13, and the preprocessing unit 14 may be implemented as a set of program modules. At this time, the program modules may be stored in the memory device and executed by the processor.

Hereinafter, a method for training a visual odometry model using the apparatus for training a visual odometry model according to the present disclosure is disclosed. However, when explaining the method for training a visual odometry model according to the present disclosure, repetitive descriptions of each component are omitted.

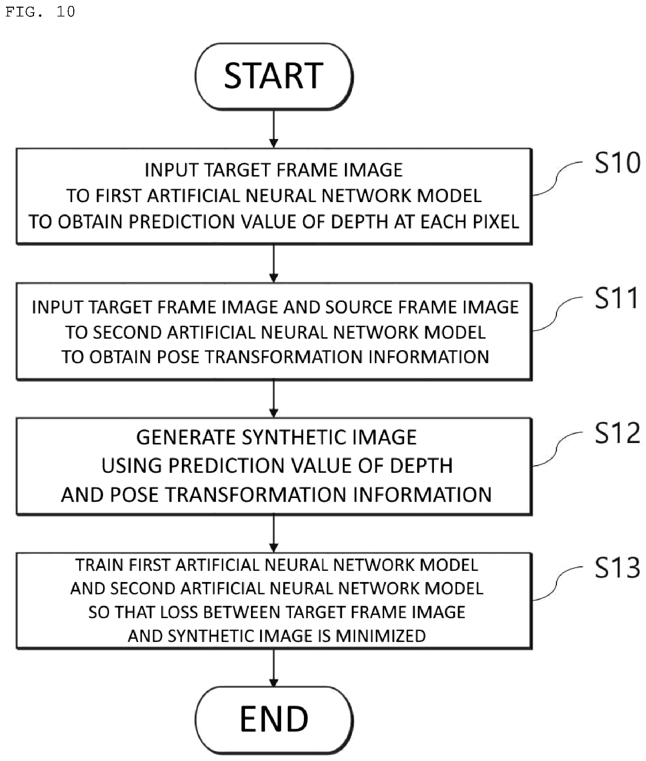

FIG. 10 is a flowchart of the method for training a visual odometry model according to one embodiment of the present disclosure.

Referring to FIG. 10, in Step S10, the depth information acquisition unit 10 inputs the target frame image 100 from the image captured by the camera to the first artificial neural network model 200 to obtain the prediction value of the depth at each pixel.

The first artificial neural network model 200 may include an encoder that generates the feature map from the target frame image 100 and the decoder that generates the prediction value of the depth from the feature map.

In Step S11, the pose information acquisition unit 11 may inputting the target frame image 100 and the source frame image 110, which is the frame image immediately before or immediately after the target frame image, to the second artificial neural network model 210 to obtain the pose transformation prediction information of the camera.

According to one embodiment of the present disclosure, the pose information acquisition unit 11 may concatenate the target frame image 100 and the source frame image 110 along the RGB channel axis and input the concatenated images into the second artificial neural network model.

The second artificial neural network model 210 may include the CNN layer that generates the feature map of the target frame image 100 and the source frame image 110, the GAP layer that generates the feature vector from the feature map, and the FC layer that generates the pose transformation prediction information from the feature vector.

The pose transformation prediction information may be expressed as a homogeneous transformation matrix representing 6 degrees of freedom from the target frame image 100 to the source frame image 110.

According to one embodiment of the present disclosure, the target frame image 100 and the source frame image 110 may be adjusted in advance by the preprocessing unit 14 to have a preset size. In addition, the target frame image 100 and the source frame image 110 may be adjusted in advance by the preprocessing unit 14 to have each pixel value within a preset range.

In Step S12, the image generation unit 12 may generate a synthetic image using the target frame image 100, the source frame image 110, the prediction value of the depth, and the pose transformation prediction information.

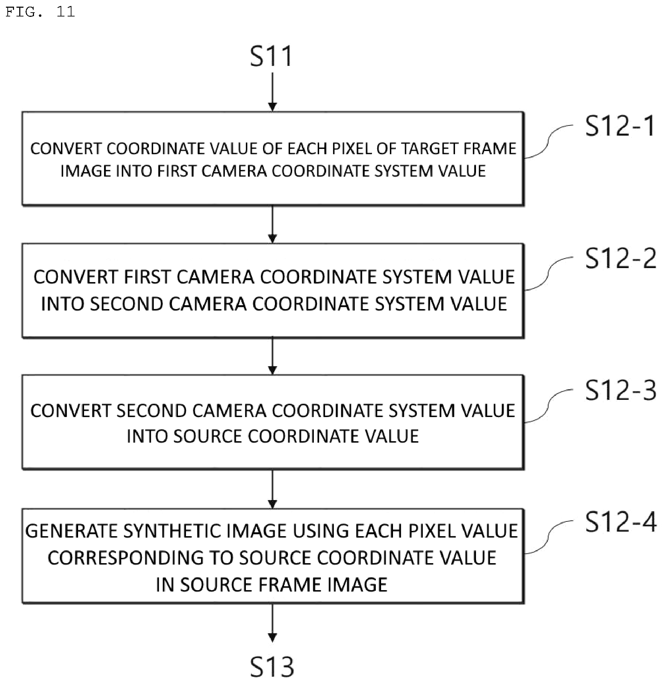

FIG. 11 is a flowchart illustrating a process for generating the synthetic image according to one embodiment of the present disclosure.

Referring to FIG. 11, in Step S12-1, the image generation unit 12 may generate the first camera coordinate system value by converting the coordinate value of each pixel of the target frame image 100 into the camera coordinate system in the first state in which the camera captures the target frame image 100 using the [Mathematical Expression 7].

In Step S12-2, the image generation unit 12 may generate the second camera coordinate system value by converting the first camera coordinate system value into the camera coordinate system in the second state in which the camera captured the source frame image 110 using the pose transformation prediction information as in the [Mathematical Expression 9].

In Step S12-3, the image generation unit 12 may convert the second camera coordinate system value into the source coordinate value, which is the pixel coordinate value in the source frame image 110, using the [Mathematical Expression 10].

In Step S12-4, the image generation unit 12 may generate the synthetic image using each pixel value corresponding to the source coordinate value.

Referring again to FIG. 10, in Step S13, the learning unit 13 may train the first artificial neural network model 200 and the second artificial neural network model 210 so that the loss between the target frame image 100 and the synthetic image is minimized.

According to one embodiment of the present disclosure, the learning unit 13 may train the first artificial neural network model 200 and the second artificial neural network model 210 so that the loss function expressed by the [Mathematical Expression 11] is minimized.

In this case, the loss function may further include the uncertainty value calculated by inputting the prediction value of the depth into the sigmoid function as in the [Mathematical Expression 12].

Additionally, the loss function may further include the smoothness loss function as in the [Mathematical Expression 13].

The learning unit 13 may train the first artificial neural network model 200 and the second artificial neural network model 210 using the gradient descent method.

According to one embodiment of the present disclosure, the learning unit 13 may sequentially train the first artificial neural network model 200 and the second artificial neural network model 210.

The method for training a visual odometry model according to an embodiment of the present disclosure may be implemented in the form of a computer program written to perform each step on a computer and recorded on a computer-readable recording medium. The aforementioned computer program may include code coded in a computer language, such as C/C++, C#, JAVA, Python, or machine language, that may be read by the processor (CPU) of the computer through the device interface of the computer, so that the computer reads the program and executes the methods implemented as a program. Such code may include functional code related to functions that define functions necessary for executing the methods, and may include control code related to execution procedures necessary for the processor of the computer to execute the functions according to a predetermined procedure. In addition, such code may further include memory reference-related code regarding which location (address address) in the internal or external memory of the computer should reference additional information or media necessary for the processor of the computer to execute the functions. In addition, when the processor of the computer needs to communicate with any other computer or server located remotely in order to execute the functions, the code may further include communication-related code regarding how to communicate with any other computer or server located remotely using the communication module of the computer, and what information or media to send and receive during communication.

The above storage medium refers to a medium that stores data semi-permanently and may be read by a device, rather than a medium that stores data for a short period of time, such as a register, cache, or memory. Specifically, examples of the storage medium include, but are not limited to, ROM, RAM, CD-ROM, magnetic tape, floppy disk, and optical data storage device. That is, the program may be stored in various recording media on various servers that the computer may access or in various recording media on the user's computer. In addition, the medium may be distributed across network-connected computer systems, so that computer-readable code may be stored in a distributed manner.

While the embodiments of the present disclosure have been described with reference to the attached drawings, those skilled in the art will appreciate that the present disclosure may be implemented in other specific forms without altering the technical spirit or essential features thereof. Therefore, the embodiments described above should be understood to be illustrative in all respects and not restrictive.

## Claims

1. An apparatus for training a visual odometry model, the apparatus comprising:
a depth information acquisition unit that inputs a target frame image from an image captured by a camera to a first artificial neural network model to obtain a prediction value of depth at each pixel;
a pose information acquisition unit that inputs the target frame image and a source frame image, which is a frame image immediately before or immediately after the target frame image, to a second artificial neural network model to obtain pose transformation prediction information of the camera;
an image generation unit that generates a synthetic image using the target frame image, the source frame image, the prediction value of the depth, and the pose transformation prediction information; and
a learning unit that trains the first artificial neural network model and the second artificial neural network model to minimize loss between the target frame image and the synthetic image.

2. The apparatus according to claim 1, wherein the first artificial neural network model includes an encoder that generates a feature map from the target frame image and a decoder that generates the prediction value of the depth from the feature map, and
the second artificial neural network model includes a convolutional neural network (CNN) layer that generates feature maps of the target frame image and the source frame image, a global average pooling (GAP) layer that generates a feature vector from the feature map, and a fully connected (FC) layer that generates the pose transformation prediction information from the feature vector.

3. The apparatus according to claim 1, further comprising a preprocessing unit that adjusts the target frame image and the source frame image to have preset sizes and adjusts a pixel value of each frame image to have a value within a preset range.

4. The apparatus according to claim 1, wherein the pose information acquisition unit concatenates the target frame image and the source frame image along an RGB channel axis and inputs the concatenated images to the second artificial neural network model.

5. The apparatus according to claim 1, wherein the pose transformation prediction information is a homogeneous transformation matrix representing a 6-degree-of-freedom transformation from the target frame image to the source frame image.

6. The apparatus according to claim 1, wherein the image generation unit generates a first camera coordinate system value by converting a coordinate value of each pixel of the target frame image into a camera coordinate system in a first state in which the camera captures the target frame image using the prediction value of the depth, generates a second camera coordinate system value by converting the first camera coordinate system value into a camera coordinate system in a second state in which the camera captures the source frame image using the pose transformation prediction information, generates a source coordinate value by converting the second camera coordinate system value into a pixel coordinate value in the source frame image, and generates the synthetic image using each pixel value corresponding to the source coordinate value in the source frame image.

7. The apparatus according to claim 1, wherein the learning unit trains the first artificial neural network model and the second artificial neural network model so that a loss function expressed by the following Mathematical Expression is minimized. ${L}_{reproj} = {\sum }_{p ∈ Ω} \left|{I}_{t}\left(p\right)-\hat{{I}_{t}}\left(p\right)\right|$
Ω : valid pixel area
*Iₜ*(*p*) : pixel value in target frame image
$\hat{{I}_{t}} \left(p\right)$ : Pixel value in synthetic image

8. The apparatus according to claim 7, wherein the loss function further includes an uncertainty value calculated by inputting the prediction value of the depth into a sigmoid function as in the following Mathematical Expression. ${L}_{reproj}^{uncertainty} = {\sum }_{p ∈ Ω} \frac{\left|{I}_{t}\left(p\right)-\hat{{I}_{t}}\left(p\right)\right|}{σ \left(p\right)} + log \left(σ\left(p\right)\right)$ *σ*(*p*) : uncertainty value in image pixel *p*

9. The apparatus according to claim 8, wherein the loss function further includes a smoothness loss function as expressed in the following Mathematical Expression. ${L}_{total} = {\sum }_{p ∈ Ω} {L}_{reproj}^{uncertainty} \left(p\right) + {λ}_{smooth} {L}_{smooth}$
*Lₛₘₒₒₜₕ* : smoothness loss
*λₛₘₒₒₜₕ* : weight of smoothness loss

10. A method for training a visual odometry model, the method comprising:
(a) inputting, by a depth information acquisition unit, a target frame image from an image captured by a camera to a first artificial neural network model to obtain a prediction value of a depth at each pixel;
(b) inputting, by a pose information acquisition unit, the target frame image and a source frame image, which is a frame image immediately before or immediately after the target frame image, to a second artificial neural network model to obtain pose transformation prediction information of the camera;
(c) generating, by an image generation unit, a synthetic image using the target frame image, the source frame image, the prediction value of the depth, and the pose transformation prediction information; and
(d) training, by a learning unit, the first artificial neural network model and the second artificial neural network model to minimize loss between the target frame image and the synthetic image.

11. The method according to claim 10, wherein the first artificial neural network model includes an encoder that generates a feature map from the target frame image and a decoder that generates the prediction value of the depth from the feature map, and
the second artificial neural network model includes a convolutional neural network (CNN) layer that generates feature maps of the target frame image and the source frame image, a global average pooling (GAP) layer that generates a feature vector from the feature map, and a fully connected (FC) layer that generates the pose transformation prediction information from the feature vector.

12. The method according to claim 10, further comprising adjusting the target frame image and the source frame image to have preset sizes and adjusting a pixel value of each frame image to have a value within a preset range.

13. The method according to claim 10, wherein the (b) includes concatenating, by the pose information acquisition unit, the target frame image and the source frame image along an RGB channel axis and inputting the concatenated images to the second artificial neural network model.

14. The method according to claim 10, wherein the pose transformation prediction information is a homogeneous transformation matrix representing a 6-degree-of-freedom transformation from the target frame image to the source frame image.

15. The method according to claim 10, wherein the (c) includes, by the image generation unit,
(c-1) generating a first camera coordinate system value by converting a coordinate value of each pixel of the target frame image into a camera coordinate system in a first state in which the camera captures the target frame image using the prediction value of the depth;
(c-2) generating a second camera coordinate system value by converting the first camera coordinate system value into a camera coordinate system in a second state in which the camera captures the source frame image using the pose transformation prediction information;
(c-3) converting the second camera coordinate system value into a source coordinate value which is a pixel coordinate value in the source frame image; and
(c-4) generating the synthetic image using each pixel value corresponding to the source coordinate value in the source frame image.

16. The method according to claim 10, wherein the (d) includes training, by the learning unit, the first artificial neural network model and the second artificial neural network model so that a loss function expressed by the following Mathematical Expression is minimized. ${L}_{reproj} = {\sum }_{p ∈ Ω} \left|{I}_{t}\left(p\right)-\hat{{I}_{t}}\left(p\right)\right|$
Ω : valid pixel area
*Iₜ*(*p*) : pixel value in target frame image
$\hat{{I}_{t}} \left(p\right)$ : Pixel value in synthetic image

17. The method according to claim 16, wherein the loss function further includes an uncertainty value calculated by inputting the prediction value of the depth into a sigmoid function as in the following Mathematical Expression. ${L}_{reproj}^{uncertainty} = {\sum }_{p ∈ Ω} \frac{\left|{I}_{t}\left(p\right)-\hat{{I}_{t}}\left(p\right)\right|}{σ \left(p\right)} + log \left(σ\left(p\right)\right)$ *σ*(*p*) : uncertainty value in image pixel *p*

18. The method according to claim 17, wherein the loss function further includes a smoothness loss function as expressed in the following Mathematical Expression. ${L}_{total} = {\sum }_{p ∈ Ω} {L}_{reproj}^{uncertainty} \left(p\right) + {λ}_{smooth} {L}_{smooth}$
*Lₛₘₒₒₜₕ* : smoothness loss
*λₛₘₒₒₜₕ :* weight of smoothness loss

19. A computer program written to perform each step of the method for training a visual odometry model according to claim 1 on a computer and recorded on a computer-readable recording medium.
